# EUROPÄISCHE PATENTANMELDUNG

(11) **EP 1 839 850 A1**
(43) Veröffentlichungstag der Anmeldung: **03.10.2007**
(21) Anmeldenummer: 07005729.4
(22) Anmeldetag: 21.03.2007
(51) Int. Cl.: B32B 27/32

(54) **Mehrschichtfolie, diese enthaltende gereckte polyolefinische Verbundfolie und zugehörige Verpackungen**

(30) Priorität: 23.03.2006 DE 102006013833
(71) Anmelder: Wipak Walothen GmbH, 29699 Bornlitz (DE)
(72) Erfinder: Sperlich, Bernd Dr., 29664 Walsrode (DE); Schwarz, Willi, 29699 Bomlitz (DE); Ahlswede, Marco, 29683 Dorfmark (DE)
(74) Vertreter: Läufer, Martina

(57) **Zusammenfassung**

Bei einer mono- oder biaxial gereckten Verbundfolie (C), mit einer polyolefinbasierten, wenigstens unidirektional gereckten Trägerfolie (A) und der zu wenigstens einer Außenseite weisenden Schichtenfolge (von außen nach innen):
- polyolefinbasierte heißsiegelbare Schicht (1),
- polyolefinbasierte erste Haftvermittlerschicht (2),
- Ethylenvinylalkohol-Copolymer-Schicht (EVOH) (3),
- polyolefinbasierte weitere Haftvermittlerschicht (4) in Kontakt mit wenigstens einer weiteren Schicht der Verbundfolie, die die Trägerfolie (A) sein kann,
wird die Bedingung erfüllt, dass entweder die heißsiegelbare Schicht (1) mindestens 60 Gew.-% Propyleneinheiten und die erste Haftvermittlerschicht (2) mindestens 60 Gew.-% Ethyleneinheiten enthält oder umgekehrt, Durch diese Maßnahme kann bei einer chlorfreien, gereckten polyolefinischen Verpackungsfolie eine oberflächennahe Gassperrschicht aus EVOH bei gleichzeitiger Siegel- und Peelfähigkeit erhalten werden. Die Verbundfolie ist besonders geeignet für Verpackungen im Lebensmittel- und Rauchwarenbereich.

## Beschreibung

Die Erfindung betrifft das Gebiet mono- oder biaxial gereckter Verpackungsfolien aus Polyolefinen. Genauer betrifft die Erfindung eine Mehrschichtfolie für die Herstellung einer mono- oder biaxial gereckten Verbundfolie, die eine Gassperrschicht in einer Schichtenfolge enthält, welche eine peelfähige Heißsiegelverbindung an der Verbundfolie ermöglicht, die Verwendung der Mehrschichtfolie und der erfindungsgemäßen Schichtenfolge in einer Verbundfolie, die zugehörige Verbundfolie, ein Verfahren zu deren Herstellung sowie zugehörige Verpackungen.

Gereckte, auch als orientiert bezeichnete Polyolefinfolien vereinen verschiedene positive insbesondere für die Verpackung von Lebensmitteln gewünschte Eigenschaften: sie sind chlorfrei, geben keine gesundheitsschädlichen Monomere ab und können relativ umweltfreundlich entsorgt, z.B. verbrannt werden. Durch das Recken verbinden sie ein relativ geringes Flächengewicht mit guten mechanischen Eigenschaften. Sie können optional hochtransparent hergestellt werden und als Schichten in dickeren Verbundfolien dienen.

Für zahlreiche Anwendungen, gerade im Lebensmittelbereich, ist es erforderlich, dass in die Verbundfolie eine Sauerstoffbarriereschicht eingebunden wird. Vor allem fetthaltige Lebensmittel, z.B. Frischfleischprodukte benötigen für zufriedenstellende Lagerzeiten eine hohe Sauerstoffbarriere.

Es sind zahlreiche Möglichkeiten zur Verbesserung der Sauerstoffbarriere bei gereckten Mehrschichtfolien aus Polypropylen bekannt. So führt z.B. die Bedampfung mit Metallen oder Metalloxiden (z.B. Aluminium oder SiOₓ) zu guten Ergebnissen. Die bedampfte Seite verliert jedoch ihre Siegelfähigkeit. Außerdem ist die metallisierte Folie nicht mehr transparent. Eine weitere Möglichkeit besteht in der Lackierung mit PVOH oder EVOH. Durch eine Lackierung auf der Außenseite ist jedoch die Folie nicht mehr siegel- und peelbar. Eine Lackierung mit PVDC siegelt nur gegen sich selbst. Diese Variante hat gleichzeitig den Nachteil, dass die Folie Chlor enthält, was für Lebensmittelverpackungen vielfach nicht gewünscht wird.

Aus der DE 3272973 A1 ist eine Verbundfolie bekannt, in die eine Gasbarriereschicht aus Ethylen-Vinylalkohol-Copolymer (EVOH) eingebunden wurde. Diese Folie ist jedoch nach dem Siegeln nicht peelfähig. Hierbei ist zu berücksichtigen, dass gereckte Folien durch die Änderung der Struktureigenschaften beim Orientieren des Polymers andere Peeleigenschaften haben als nicht gereckte Folien. Die Peeleigenschaften sind daher aus der Kenntnis nicht gereckter Folien nicht unbedingt voraussagbar. Wohl aus diesem Grund ist bislang keine heißsiegelbare Verbundfolie mit oberflächennaher Gassperrschicht bekannt, deren Siegelung zumindest bereichsweise wieder zu lösen ist, ohne dass die Folie zerreißt (Peelbarkeit).

Die Aufgabe der Erfindung besteht darin, eine gereckte, in erster Linie polyolefinische Verpackungsfolie bereitzustellen, die chlorfrei ist, eine zusätzliche Sauerstoffbarriere besitzt und an wenigstens einer Oberfläche heißsiegelbar ist, wobei diese Heißsiegelverbindung peelbar, d.h. ohne Zerstörung der Folie wieder zu lösen sein soll.

Die Erfindung basiert auf der Erkenntnis, dass ein bestimmter Schichtaufbau kombiniert mit einer bestimmten Schichtenfolge für die Siegel- und Gassperrschicht in Anbindung an die übrigen Schichten eine peelbare Heißsiegelung in Nähe der Gassperrschicht ermöglicht. Die Erfindung umfasst daher den Aufbau einer Mehrschichtfolie unter deren Verwendung, bzw. Verwendung der entsprechenden Schichtenfolge, die Verbundfolie erhalten werden kann.

Gemäß einem ersten Aspekt der Erfindung wird die Aufgabe durch eine Mehrschichtfolie für die Herstellung einer mono- oder biaxial gereckten Verbundfolie gelöst, die eine Gassperrschicht in einer Schichtenfolge enthält, die eine peelfähige Heißsiegelverbindung an der Verbundfolie ermöglicht, und die gekennzeichnet ist durch die Anwesenheit folgender Schichten in der angegebenen Reihenfolge:
- eine polyolefinbasierte heißsiegelbare Schicht,
- eine polyolefinbasierte erste Haftvermittlerschicht,
- eine Ethylenvinylalkohol-Copolymer-Schicht (EVOH),
- eine polyolefinbasierte weitere Haftvermittlerschicht für die Anbindung der Mehrschichtfolie an wenigstens eine weitere Schicht zur Bildung der Verbundfolie,
wobei entweder die heißsiegelbare Schicht mindestens 60 Gew.-% Propyleneinheiten und die erste Haftvermittlerschicht mindestens 60 Gew.-% Ethyleneinheiten enthält oder umgekehrt.

Die Erfindungsgemäße Abstimmung bzw. Variation von Polypropylen- und Polyethylengehalt der ersten beiden Schichten der erfindungsgemäßen Schichtenfolge in Kombination mit einer direkt unter diesen beiden Schichten liegenden EVOH-Gassperrschicht gewährleistet überraschenderweise die Peelbarkeit der zugehörigen gereckten Verbundfolie.

Unter einer polyolefinbasierten Schicht wird hier eine solche verstanden, die mehr als 60 Gew.-% Polyolefinanteil, vorzugsweise mehr als 70 Gew.-% Polyolefinanteil und weiter vorzugsweise mehr als 85 Gew.-% Polyolefinanteil enthält. Dabei kann es sich um Homo-olefine, insbesondere Polyethylen, Polypropylen oder auch weitere α-Polyolefine wie insbesondere Polybutylen handeln, um Mischungen aus diesen Polymeren oder um olefinische Copolymere (einschließlich von Terpolymeren und höheren Copolymerisaten) sowie wiederum Mischungen hierunter oder mit Homopolymerisaten. Geringere Anteile nicht-olefinischer Polymere sowie übliche Zusatz- und Hilfsstoffe können vorhanden sein.

Die Erfindung kann unter völligem Verzicht auf chlorhaltige Schichten realisiert werden.

Die Einzelschichten der Mehrschichtfolie sind vorzugsweise 3 bis 50 µm, weiter vorzugsweise 5 bis 20 µm, dick. Durch das spätere Recken bei biaxial gereckten Verbundfolien (siehe unten) verringern sich diese Schichtdicken nochmals, so dass vergleichsweise dünne Siegel-, Haftvermittler-, und EVOH-Schichten bei der Erfindung zum Einsatz kommen. Dennoch bleiben Siegel- und Peelfähigkeit gut erhalten, wie die Beispiele zeigen.

Es wird derzeit als vorteilhaft angesehen, dass die polyolefinbasierten Haftvermittlerschichten Schichten gleiche oder verschiedene Schichten aus Carboxylgruppen-modifiziertem Polyolefin oder Polyolefin-Copolymer sind, vorzugsweise aus Maleinsäureanhydrid-modifiziertem Polymer, insbsondere PE, LDPE, LLDPE, PP, PP/PE-Copolymer, PP/PE/α-Olefin-Terpolymer.

Die modifizierten Polyolefine der Haftvermittlerschicht enthalten vorzugsweise Carboxylgruppen. Es handelt sich um Polyolefine wie Polypropylen oder Polyethylen, die beispielsweise mindestens ein Monomer aus der Gruppe der α,β-einfach ungesättigten Dicarbonsäuren, wie z. B. Maleinsäure, Fumarsäure, Itaconsäure oder deren Säureanhydride, Säureester, Säureamide und Säureimide aufgepfropft enthalten. Copolymerisate von Ethylen mit α,β-einfach ungesättigten Cabonsäuren, wie Acrylsäure, Methacrylsäure und/oder deren Metallsalzen (Zn, Na) und/oder deren Alkyl(C1-C4)estern oder entsprechende Pfropfpolymere auf Polyolefine wie Polyethylen oder Polypropylen oder verseifte Mischpolymerisate, die mit einem Monomer der o. g. ungesättigten Säuren pfropfpolymerisiert sind.

Besonders bevorzugt sind Polyolefine wie Propylen oder Copolymersate von Propylen und Ethylen, mit maximal 1 Gew.-% aufgepfropften α,β-einfach ungesättigtem Dicarbonsäureanhydrid wie Maleinsäureanhydrid oder deren verseifte Mischpolymerisate.

Weiterhin ist es bevorzugt, dass die polyolefinbasierten Schichten wenigstens 70 Gew.-% Polyolefinanteil besitzen, ausgewählt aus der Gruppe PP, PE, α-Olefin-Polymer, einschließlich von Mischungen und/oder Copolymeren mit und zwischen diesen Polyolefinen.

Vorteilhafte Kombinationen für die Schichten heißsiegelbare Schicht/erste Haftvermittlerschicht sind beispielsweise:
Siegelschicht PP-Copolymer (z.B. PP/Et mit PP-Überschuss) oder PP-Terpolymer (PP im Überschuss/PE/α-Olefin, z.B. PBu) - erste Haftvermittlerschicht PE oder vorwiegend PE,
Siegelschicht PE oder PE-Copolymer (PE jeweils im Überschuss) - erste Haftvermittlerschicht PP-Homo- oder Copolymer (PP jeweils im Überschuss, Copolymer bevorzugt mit PE).

α-Olefine bedeuten hier in erster Linie solche mit C₄ bis C₁₀, vorzugsweise eher lineare Olefine, nämlich Buten, Penten, Hexen, Octen, Nonen, Decen, aber auch 4-Methylpenten u.a..

In Weiterbildung dieses ersten Aspekts der Erfindung kann auf der Siegelschichtseite wenigstens eine weitere Schicht aufliegen, wobei die oberste Schicht heißsiegelbar ist (Deckschichten). Sehr dünne Auflagen, z.B. Lackierungen oder Drucke, durch die "hindurchgesiegelt" werden kann, wie dies dem Fachmann bekannt ist, können ausnahmsweise zusätzlich vorhanden sein. Insbesondere kann bei diesen Ausführungsbeispielen die heißsiegelbare Schicht ersetzt sein durch die Schichtenfolge: heißsiegelbare Schicht, Haftvermittlerschicht, Gassperrschicht, Haftvermittlerschicht, heißsiegelbare Schicht gleichartig zur ersten, wobei die Gassperrschicht vorzugsweise eine EVOH-Schicht ist. Diese Art von Schichten bzw. Lagen ist dem Fachmann unter dem Begriff "Siegelsperrschicht" bekannt.

Gemäß einem weiteren Aspekt der Erfindung wird die neu bereitgestellte erfindungsgemäße Mehrschichtfolie für die Herstellung einer mono- oder biaxial gereckten Verbundfolie verwendet..

Allgemein wird also die Schichtenfolge:
- polyolefinbasierte heißsiegelbare Schicht,
- polyolefinbasierte erste Haftvermittlerschicht,
- Ethylenvinylalkohol-Copolymer-Schicht (EVOH),
- polyolefinbasierte weitere Haftvermittlerschicht ,
wobei entweder die heißsiegelbare Schicht mindestens 60 Gew.-% Propyleneinheiten und die erste Haftvermittlerschicht mindestens 60 Gew.-% Ethyleneinheiten enthält oder umgekehrt,
innerhalb einer polyolefinbasierten mono- oder biaxial orientierten Verbundfolie verwendet.

Hieraus ergibt sich die die Aufgabe der Erfindung lösende neue mono- oder biaxial gereckte Verbundfolie, die eine polyolefinbasierte, wenigstens unidirektional gereckte Trägerfolie enthält und die die nachfolgend angegebene zu wenigstens einer Außenseite weisenden Schichtenfolge aufweist (von außen nach innen):
- polyolefinbasierte heißsiegelbare Schicht,
- polyolefinbasierte erste Haftvermittlerschicht,
- Ethylenvinylalkohol-Copolymer-Schicht (EVOH),
- polyolefinbasierte weitere Haftvermittlerschicht in Kontakt mit wenigstens einer weiteren Schicht der Verbundfolie, die die Trägerfolie sein kann,
wobei entweder die heißsiegelbare Schicht mindestens 60 Gew.-%
Propyleneinheiten und die erste Haftvermittlerschicht mindestens 60 Gew.-%
Ethyleneinheiten enthält oder umgekehrt,
ein- oder beidseitig von der Trägerfolie.

"Zur Außenseite weisend" bedeutet, dass zwischen der erfindungsgemäßen Schichtfolge und der Trägerfolie jeweils weitere Schichten vorhanden sein können, dass jedoch die erfindungsgemäße Schichtfolge zumindest in Oberflächennähe der Verbundschicht angeordnet ist (siehe vorstehend zu Deckschichten und Siegelsperrschichten).

Die Trägerfolie der Verbundfolie kann aus einem Polymer bestehen, das ausgewählt ist aus der Gruppe Polypropylen, Polyethylen, weiteren α-Olefinen wie insbesondere Polybutylen, Polyamid oder Polyester, einschließlich von Mischungen und/oder Copolymeren mit und zwischen diesen Polymeren, wobei die üblichen Zusatz- und Hilfsstoffe vorhanden sein können.

Die Trägerfolie hat eine für den Zweck übliche Dicke von ca. 15 bis 1000 µm, vorzugsweise 10 bis 100 µm, insbesondere 15 bis 40 µm.

Die erfindungsgemäße Verbundfolie ist besonders geeignet als Verpackungsfolie, insbesondere für Lebensmittel- oder Rauchwarenverpackungen, vorzugsweise für die mehrlagige Verpackung von Wurst- und Fleischwaren. Die Erfindung umfasst daher auch zugehörige, mit der Verbundfolie hergestellte Verpackungen.

Schließlich umfasst die Erfindung zur Lösung der gestellten Aufgabe auch ein Verfahren zur Herstellung einer mono- oder biaxial gereckten Mehrschichtfolie auf Polyolefinbasis, die eine Gassperrschicht in einer Schichtenfolge enthält, die eine peelfähige Heißsiegelverbindung ermöglicht. Dabei ist das erfindungsgemäße Verfahren gekennzeichnet durch folgende Schritte:
a) Coextrudieren einer Mehrschichtfolie mit dem erfindungsgemäßen Schichtaufbau;
b) Recken einer einschichtigen polyolefinbasierten Folie (Trägerfolie) in Maschinenlaufrichtung (Längsreckung) in einem Verhältnis zwischen 1:3 und 1:7, vorzugsweise um 1:5,
c) Auflegen einer gemäß Schritt a) coextrudierten Mehrschichtfolie auf wenigstens eine Seite der Trägerfolie
d) Verbinden der Trägerfolie und der Mehrschichtfolie, bzw. der Trägerfolie und beidseitig je einer Mehrschichtfolie durch Druck und/oder Temperatur zu einer monoaxial orientierten Verbundfolie.

Aus dieser monoaxial gereckten bzw. orientierten Folie kann durch weiteres Recken eine biaxial gereckte bzw. orientierte Folie hergestellt werden.

Hierfür wird die Verbundfolie im Anschluss an Schritt d) quer zur Maschinenrichtung (Querreckung) um einen Faktor zwischen 5 und 15, vorzugsweise um einen Faktor zwischen 8 und 12, zu einer biaxial orientierten Folie gereckt.

Bei der neuen Verbundfolie wird eine wesentliche Verbesserung der Sauerstoff-Barrierewirkung erreicht, und zwar etwa um den Faktor 10, wenigstens um den Faktor 5.

Im Folgenden wird die Erfindung anhand eines Ausführungsbeispiels für den Folienaufbau dargestellt. Dabei wurden verschiedene Schichtzusammensetzungen innerhalb eines grundsätzlich gleichen Aufbaus verglichen. Variationen am Aufbau durch Zwischen- und Deckschichten, wie vorstehend in der Beschreibung beschrieben sind dem Fachmann geläufig und brauchen hier nicht gesondert beschrieben zu werden.

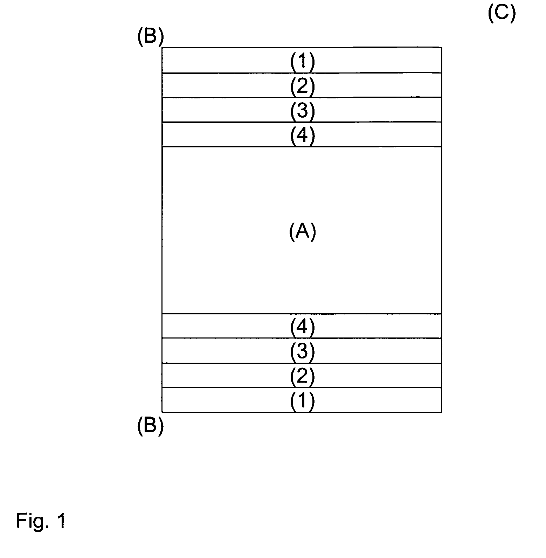

Der Aufbau des Schichtfolgebeispiels ist in Figur 1 gezeigt: Eine Trägerfolie (A) ist beidseitig umgeben von zwei aufgelegten und thermisch mit ihr verbundenen Mehrschichtfolien (B), jeweils mit dem Aufbau:
- polyolefinbasierte heißsiegelbare Schicht (1),
- polyolefinbasierte erste Haftvermittlerschicht (2),
- Ethylenvinylalkohol-Copolymer-Schicht (EVOH) (3),
- polyolefinbasierte weitere Haftvermittlerschicht (4) für die Anbindung zur Trägerfolie (A).

Innerhalb dieses Schichtfolgebeispiels wurden verschiedene Schichtzusammensetzungen gemäß den Angaben in Tabelle 1 realisiert.

### Herstellungsverfahren für die Beispiele:

Bei allen Beispielen wird zunächst eine einschichtige Polypropylenfolie A der Dicke 1000 µm im Verhältnis 1:5 in Maschinenlaufrichtung gereckt, anschließend auf beiden Seiten ein coextrudierte Mehrschichtfolie B aufgelegt und mit der Polypropylenfolie A thermisch verbunden. Die dadurch entstandene Verbundfolie C wird schließlich um den Faktor 10 quer zur Maschinenrichtung gereckt.

Der Schichtaufbau der verwendeten Mehrschichtfolien B ist aus folgender Tabelle (Tab. 1) ersichtlich. Schicht 1 bildet jeweils bei der fertigen Verbundfolie C die Außenseite:

**Tabelle 1**

| Mehrschichtfolie B | Schicht 1 | Schicht 2 | Schicht 3 | Schicht 4 |
|---|---|---|---|---|
| | (10 µm) | (10 µm) | (10 µm) | (10 µm) |
| Beispiel 1: | Propylenethylencopolymer mit 4,5 % Ethylen | Maleinsäureanhydrid-modifiziertes LLDPE | Ethylenvinylalkoholcopolymer mit 48 % Ethylen | Maleinsäureanhydrid-modifiziertes LLDPE |
| Beispiel 2: | Propylenbutylenethylenterpolymer mit 8 % Butylen und 3 % Ethylen | Maleinsäureanhydrid-modifiziertes LLDPE | Ethylenvinylalkoholcopolymer mit 48 % Ethylen | Maleinsäureanhydrid-modifziertes LLDPE |
| Beispiel 3: | Propylenethylencopolymer mit 4,5 % Ethylen | Maleinsäureanhydrid-modifiziertes LDPE | Ethylenvinylalkoholcopolymer mit 48 % Ethylen | Maleinsäureanhydrid-modifiziertes LLDPE |
| Beispiel 4: | LDPE | Maleinsäure-anhydrid-modifiziertes Propylenethylencopolymer | Ethylenvinyl-alkoholcopolymer mit 48 % Ethylen | Maleinsäureanhydrid-modifiziertes LLDPE |
| Vergleichsbeispiel 1 : | Propylenethylencopolymer mit 4,5 % Ethylen | Maleinsäureanhydrid-modifiziertes Propylenethylencopolymer | Ethylenvinyl-alkoholcopolymer mit 48 % Ethylen | Maleinsäureanhydrid-modifiziertes LLDPE |
| Vergleichsbeispiel 2: | LDPE | Maleinsäure-anhydrid-modifziertes LLDPE | Ethylenvinyl-alkoholcopolymer mit 48 % Ethylen | Maleinsäureanhydrid-modifiziertes LLDPE |
| Vergleichsbeispiel 3: | Propylenethylen-copolymer mit 4,5 % Ethylen | Maleinsäure-anhydrid-modifiziertes LLDPE | Maleinsäureanhydrid-modifiziertes LLDPE | |

**Tabelle 2**

| | Siegelnahtfestigkeit in N/15 mm bei folgender Siegeltemperatur | | | | | |
|---|---|---|---|---|---|---|
| Beispiel | 90 °C | 100 °C | 110 °C | 120 °C | 130 °C | |
| 1 | 0 | 0 | 0,1 | 0,7 | 0,7 | |
| | | | (peelfähig) | (peelfähig) | (peelfähig) | |
| 2 | 0 | 0 | 0,4 | 0,6 | 0,6 | |
| | | | (peelfähig) | (peelfähig) | (peelfähig) | |
| 3 | 0 | 0 | 0,2 | 0,7 | 0,6 | |
| | | | (peelfähig) | (peelfähig) | (peelfähig) | |
| 4 | 0 | 0,2 | 0,4 | 0,6 | 0,6 | |
| | | (peelfähig) | (peelfähig) | (peelfähig) | (peelfähig) | |
| Vgl.1 | 0 | 0 | 0,2 | 0,7 | 1,2 | |
| | | | (Folie reißt) | (Folie reißt) | (Folie reißt) | |
| Vgl.2 | 0 | 0,2 | 0,6 | 0,9 | 0,8 | |
| | | (Folie reißt) | (Folie reißt) | (Folie reißt) | (Folie reißt) | |
| Vgl.3 | 0 | 0 | 0,3 | 0,5 | 0,9 | |
| | | | (peelfähig) | (Folie reißt) | (Folie reißt) | |

Aus den Beispielen wird deutlich, dass für die Peelfähigkeit immer der direkte Kontakt eines PP-copolymeren mit einem PE notwendig ist, wobei entweder das PP-Copolymere oder das PE als Siegelschicht fungieren kann. Nur in den Beispielen 1-4 kann die mit sich selbst versiegelte Folie wieder mechanisch getrennt werden, ohne dass die Folie dabei reißt. Vergleichsbeispiel 3 verdeutlicht, dass auch das Ethylenvinylalkohol-copolymer notwendig ist, um die Peelbarkeit über einen größeren Temperaturbereich zu ermöglichen.

## Patentansprüche

1. Mehrschichtfolie (B) für die Herstellung einer mono- oder biaxial gereckten Verbundfolie (C), enthaltend eine Gassperrschicht in einer Schichtenfolge, die eine peelfähige Heißsiegelverbindung an der Verbundfolie ermöglicht,
**gekennzeichnet durch** die Anwesenheit folgender Schichten in der angegebenen Reihenfolge:
- eine polyolefinbasierte heißsiegelbare Schicht (1),
- eine polyolefinbasierte erste Haftvermittlerschicht (2),
- eine Ethylenvinylalkohol-Copolymer-Schicht (EVOH) (3),
- eine polyolefinbasierte weitere Haftvermittlerschicht (4) für die Anbindung der Mehrschichtfolie (B) an wenigstens eine weitere Schicht zur Bildung der Verbundfolie (C), wobei entweder die heißsiegelbare Schicht (1) mindestens 60 Gew.-% Propyleneinheiten und die erste Haftvermittlerschicht (2) mindestens 60 Gew.-% Ethyleneinheiten enthält oder umgekehrt.

2. Mehrschichtfolie (B) nach Anspruch 1, **dadurch gekennzeichnet, dass** die Einzelschichten (1) bis (4) 3 bis 50 µm, vorzugsweise 5 bis 20 µm, dick sind.

3. Mehrschichtfolie (B) nach Anspruch 1 oder 2, **dadurch gekennzeichnet, dass** die polyolefinbasierten Haftvermittlerschichten Schichten gleiche oder verschiedene Schichten aus Carboxylgruppen-modifiziertem Polyolefin oder Polyolefin-Copolymer sind, vorzugsweise aus Maleinsäureanhydrid-modifiziertem Polymer, insbesondere PE, LDPE, LLDPE, PP/PE-Copolymer, PP/PE/α-Olefin-Terpolymer.

4. Mehrschichtfolie (B) nach einem der Ansprüche 1 bis 3, **dadurch gekennzeichnet, dass** die polyolefinbasierten Schichten wenigstens 70 Gew.-% Polyolefinanteil besitzen, ausgewählt aus der Gruppe PP, PE, α-Olefin-Polymer, einschließlich von Mischungen und/oder Copolymeren mit und zwischen diesen Polyolefinen.

5. Mehrschichtfolie (B) nach einem der Ansprüche 1 bis 4, **dadurch gekennzeichnet, dass** auf der Seite der Schicht (1) wenigstens eine weitere Schicht aufliegt, wobei die oberste Schicht heißsiegelbar ist.

6. Mehrschichtfolie (B) nach Anspruch 5, **dadurch gekennzeichnet, dass** die heißsiegelbare Schicht (1) ersetzt ist durch die Schichtenfolge: heißsiegelbare Schicht (1), Haftvermittlerschicht, Gassperrschicht, Haftvermittlerschicht, heißsiegelbare Schicht gleichartig zu (1), wobei die Gassperrschicht vorzugsweise eine EVOH-Schicht ist.

7. Verwendung der Mehrschichtfolie (B) nach einem der Ansprüche 1 bis 6, für die Herstellung einer mono- oder biaxial gereckten Verbundfolie (C).

8. Verwendung der Schichtenfolge:
- polyolefinbasierte heißsiegelbare Schicht (1),
- polyolefinbasierte erste Haftvermittlerschicht (2),
- Ethylenvinylalkohol-Copolymer-Schicht (EVOH) (3),
- polyolefinbasierte weitere Haftvermittlerschicht (4),
wobei entweder die heißsiegelbare Schicht (1) mindestens 60 Gew.-% Propyleneinheiten und die erste Haftvermittlerschicht (2) mindestens 60 Gew.-% Ethyleneinheiten enthält oder umgekehrt, innerhalb einer polyolefinbasierten mono- oder biaxial orientierten Verbundfolie (C).

9. Mono- oder biaxial gereckte Verbundfolie (C), mit einer polyolefinbasierten, wenigstens unidirektional gereckten Trägerfolie (A) und der zu wenigstens einer Außenseite weisenden Schichtenfolge, von außen nach innen:
- polyolefinbasierte heißsiegelbare Schicht (1),
- polyolefinbasierte erste Haftvermittlerschicht (2),
- Ethylenvinylalkohol-Copolymer-Schicht (EVOH) (3),
- polyolefinbasierte weitere Haftvermittlerschicht (4) in Kontakt mit wenigstens einer weiteren Schicht der Verbundfolie, die die Trägerfolie (A) sein kann,
wobei entweder die heißsiegelbare Schicht (1) mindestens 60 Gew.-% Propyleneinheiten und die erste Haftvermittlerschicht (2) mindestens 60 Gew.-% Ethyleneinheiten enthält oder umgekehrt, ein- oder beidseitig von der Trägerfolie (A).

10. Verbundfolie (C) nach Anspruch 9, **dadurch gekennzeichnet, dass** auf der oder wenigstens einer der heißsiegelbaren Schicht(en) (1) wenigstens eine weitere Schicht aufliegt, wobei die jeweils oberste Schicht heißsiegelbar ist.

11. Verbundfolie (C) nach Anspruch 10, **dadurch gekennzeichnet, dass** die oder wenigstens eine heißsiegelbare Schicht (1) ersetzt ist durch die Schichtenfolge: heißsiegelbare Schicht (1), Haftvermittlerschicht, Gassperrschicht, Haftvermittlerschicht, heißsiegelbare Schicht gleichartig zu (1), wobei die Gassperrschicht vorzugsweise eine EVOH-Schicht ist.

12. Verbundfolie (C) nach einem der Ansprüche 9 bis 11, **dadurch gekennzeichnet, dass** die Trägerfolie (A) aus einem Polymer besteht, das ausgewählt ist aus der Gruppe Polypropylen, Polyethylen, weiteren α-Olefinen wie insbesondere Polybutylen, Polyamid oder Polyester, einschließlich von Mischungen und/oder Copolymeren mit und zwischen diesen Polymeren, wobei die üblichen Zusatz- und Hilfsstoffe vorhanden sein können.

13. Verbundfolie (C) nach einem der Ansprüche 9 bis 12, **dadurch gekennzeichnet, dass** die Trägerfolie (A) nach dem Recken 15 bis 1000 µm, vorzugsweise 10 bis 100 µm, insbesondere 15 bis 40 µm, dick ist.

14. Verwendung der Verbundfolie (C) nach einem der Ansprüche 9 bis 13 als Verpackungsfolie, insbesondere für Lebensmittel- oder Rauchwarenverpackungen, vorzugsweise für die mehrlagige Verpackung von Wurst- und Fleischwaren.

15. Verpackung, enthaltend eine Verbundfolie nach einem der Ansprüche 9 bis 14, insbesondere für die Verpackung von Lebensmitteln und Rauchwaren.

16. Verfahren zur Herstellung einer mono- oder biaxial gereckten Mehrschichtfolie auf Polyolefinbasis, die eine Gassperrschicht in einer Schichtenfolge enthält, die eine peelfähige Heißsiegelverbindung ermöglicht, **gekennzeichnet durch** folgende Schritte:
a) Coextrudieren einer Mehrschichtfolie (B) mit einem Aufbau gemäß einem der Ansprüche 1 bis 6;
b) Recken einer einschichtigen polyolefinbasierten Folie (A) in Maschinenlaufrichtung (Längsreckung) in einem Verhältnis zwischen 1:3 und 1:7, vorzugsweise um 1:5,
c) Auflegen einer gemäß Schritt a) coextrudierten Mehrschichtfolie (B) auf wenigstens eine Seite der Folie (A)
d) Verbinden der Folien (A) und (B), bzw. (B), (A) und (B) **durch** Druck und/oder Temperatur zu einer monoaxial orientierten Verbundfolie (C).

17. Verfahren nach Anspruch 16, **dadurch gekennzeichnet, dass** die Verbundfolie (C) im Anschluss an Schritt d) quer zur Maschinenrichtung (Querreckung) um einen Faktor zwischen 5 und 15, vorzugsweise um einen Faktor zwischen 8 und 12, zu einer biaxial orientierten Folie gereckt wird.
